(19)

**Europäisches Patentamt**

**European Patent Office**

**Office européen des brevets**

(11) **EP 4 579 270 A1**

(12) **EUROPEAN PATENT APPLICATION**

(43) Date of publication:
02.07.2025 Bulletin 2025/27

(21) Application number: 24221589.5

(22) Date of filing: 19.12.2024

(51) International Patent Classification (IPC):
$G01S\ 7/35^{(2006.01)}$     $G01S\ 13/32^{(2006.01)}$
$G01S\ 13/34^{(2006.01)}$     $G01S\ 13/44^{(2006.01)}$
$G01S\ 13/58^{(2006.01)}$     $G01S\ 13/931^{(2020.01)}$

(52) Cooperative Patent Classification (CPC):
G01S 7/354; G01S 7/356; G01S 13/325;
G01S 13/343; G01S 13/4418; G01S 13/584;
G01S 13/931

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.12.2023 RO 202300885

(71) Applicant: NXP B.V.
5656 AG Eindhoven (NL)

(72) Inventors:
• Liu, Baokun
5656AG Eindhoven (NL)

• Rosu, Filip Alexandru
5656AG Eindhoven (NL)
• Wu, Ryan Haoyun
5656AG Eindhoven (NL)
• Brigalda, Adriana
5656AG Eindhoven (NL)
• Jansen, Feike Guus
5656AG Eindhoven (NL)

(74) Representative: Hardingham, Christopher Mark
NXP Semiconductors
Intellectual Property Group
The Cattle Barn
Upper Ashfield Farm, Hoe Lane
Romsey, Hampshire S051 9NJ (GB)

(54) **MIMO RADAR WITH OBJECT REFLECTED SIGNAL OVERLAP DETECTION**

(57) A system and method for processing received radar signals is presented. A range-Doppler map is determined that includes values associated with a plurality of range bins and a plurality of Doppler bins. A subarray is determined using the range-Doppler map. A plurality of spectra are calculated using the first subarray. Each spectra in the plurality of spectra is associated with a transmit channel of a plurality of transmit channels. Attributes of each spectrum in the plurality of spectra are determined. A first spectrum in the plurality of spectra that includes local peaks that are not in the other spectra in the plurality of spectra is determined. Values in the range-Doppler map associated with the transmit channel associated with the first spectrum are modified to determine a corrected range-Doppler map. An estimated direction of arrival of a first object is determined using the corrected range-Doppler map.

FIG. 7

EP 4 579 270 A1

**Description**

TECHNICAL FIELD

The present disclosure is directed in general to radar systems and associated methods of operation. In one aspect, the present disclosure relates to a Doppler-division multiplexing (DDM) multiple-input, multiple-output (MIMO) radar system, such as an automotive radar system, configured to mitigate Doppler spectrum overlap in signals processed by the radar system to enable automation of certain vehicle functions, such parking assistance and/or potential collision safety alerts.

BACKGROUND

A radar system, such as an automotive radar system, transmits an electromagnetic signal and receives back reflections of the transmitted signal. The time delay and/or time delay variation between the transmitted and received signals can be determined and used to calculate the distance and/or the speed of objects, such as cars, trucks, motorcycles, traffic signs, roadway fixtures, and the like, causing the reflections, respectively. For example, in automotive applications, automotive radar systems can be used to determine the distance and/or the speed of oncoming vehicles and other obstacles.

Automotive radar systems enable the implementation of advanced driver-assistance system (ADAS) functions that are likely to enable increasingly safe driving and, eventually, fully autonomous driving platforms. Such systems use radar systems as the primary sensor for ADAS operations.

In a radar system, signal processing requires the analysis of range-Doppler datasets when determining the direction of arrival (DOA) of objects represented in those datasets. If the radar system is configured as a Doppler-division multiplexing (DDM) multiple-input, multiple-output (MIMO) radar system there is a risk of Doppler spectrum signal overlap within the dataset, which can reduce the accuracy of any such DOA estimates, particularly when higher velocity or nearby objects are located within the vicinity of the vehicle radar system.

BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 shows a block diagram of a DDM MIMO automotive radar system.
FIG. 2 depicts a timing diagram that may be used to determine a sequence of signal transmitted by a DDM-MIMO radar system.
FIG. 3 depicts a plot of the Doppler spectrum as a function of the radian frequency (and Doppler shift) for a uniform DDM-MIMO radar system.
FIG. 4 is a flowchart depicting a method for processing raw data corresponding to sampled return signals corresponding to reflections of transmitted signals that are reflected by objects in an environment around a DDM-MIMO radar system.
FIG. 5 shows an example of a coherently integrated range-Doppler matrix.
FIG. 6 is a graph depicting Doppler spectrum as a function of the radian frequency (and Doppler shift) for a uniform DDM-MIMO radar system in which signal overlap is present for two objects within a particular Doppler bin.
FIG. 7 is a flow chart depicting a method for detecting Doppler spectrum overlap in DDM MIMO radar systems in accordance with the present disclosure.
FIG. 8 depicts the geometrical arrangement of transmit and receive antennas in an example radar system.
FIG. 9 depicts example spectra that may be generated for a first object and a number of transmit channels.
FIG. 10 depicts example spectra that may be generated for the second object for a number of transmit channels.

DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

Automotive radar systems are used to support advanced driver-assistance system (ADAS) functions like assisted cruise control, emergency braking, blind spot monitoring, and alerts.

Various embodiments described herein relate to Doppler Division Multiplexing (DDM) Multiple-Input Multiple-Output (MIMO) radar systems with integrated object or obstacle tracking capabilities including a capability of determining direction of arrival (DOA) of detected objects.

In one or more embodiments, an example radar system as may be used in an automotive application and includes a microcontroller unit (MCU) having a signal processor configured to generate a range-Doppler data set from, for example, raw analog-to-digital (ADC) samples derived from return signals (i.e., reflections) corresponding to reflections of transmit signals (e.g., chirps) transmitted via transmitter (TX) antenna elements of the radar system (e.g., in accordance with a Doppler division scheme having, for example, a uniform pulse repetition interval (PRI)), where the return signals are received via receiver (RX) antenna elements of the radar system. For example, the range-Doppler data sets may be generated by performing range compression (e.g., in the form of a fast-time Fast Fourier transform (FFT)) and Doppler compression (e.g., in the form of a slow-time FFT) on raw ADC samples output by one or more ADCs of receiver modules of the radar system. The signal processor may then perform per-channel DOA estimation by performing a channel dimension FFT for each range-Doppler cell of the range-Doppler data set to generate a respective FFT output matrix for each range bin. The signal processor may then perform DDM decoding based on the FFT output matrices to generate a decoded range-Doppler bit map (RDBM), where each row of the RDBM corresponds to a respective FFT output matrix of the FFT output matrices and, therefore, a respective range bin of the range-Doppler data set. While one or more embodiments described herein involve the use of FFTs, it should be understood that this is intended to be illustrative and not limiting. Other suitable techniques for carrying out Discrete Fourier Transforms (DFTs) may instead be used in accordance with one or more other embodiments.

Standard DDM MIMO technology implies all radar system transmitters are active in the same timeframe, with each transmitter having a respectively different self-induced chirp-to-chirp phase rotation, while maintaining a common and constant Pulse Repetition Frequency (PRF). This results in a sequence of signals being transmitted from each transmitter module that are orthogonal in the Doppler domain, such that the return signal received from each object is replicated at a different velocity in the Doppler domain, depending on the transmitter module (or TX channel) associated with the return signal. The manner in which these replications appear in the Doppler domain is determined by the DDM code, and the order of the replications is required to be known in order to correctly construct the MIMO array. Finding the order of such replication signals in the Doppler domain may be referred to as "decoding" and is equivalent to finding the unambiguous velocity of the corresponding objects within the $\pm \frac{1}{2T_R}$ unambiguous Doppler range, where $T_R$ is the Pulse Repetition Interval (PRI).

Existing solutions for DDM decoding rely on the use of detection algorithms that are susceptible to channel overlap error of the various Doppler velocity-separated replication signals that are present within the Doppler domain. The likelihood that such values may overlap (generating erroneous values) may be increased, for example, in the case of near-range and/or higher-speed objects. Overlapping object signals can therefore affect a vehicle radar system's driver assistance decision making.

To mitigate these signal overlap errors, the present disclosure provides a vehicle radar system including a signal processing chain configured to detect potential overlap occurring within a range-Doppler data frame. Specifically, the present disclosure provides a radar system signal processor configured to process receiver channel RX linear subarrays for each available transmit channel TX, for each subarray, determine spectra, and, based upon those subarray spectra, identify the subarrays associated with transmitter/receiver pairs that represent outliers that are likely to have been corrupted by Doppler-signal overlap. Those subarrays can then be zeroed out or otherwise modified to mitigate the effects of that corruption on the vehicle radar system's ultimate DOA estimation.

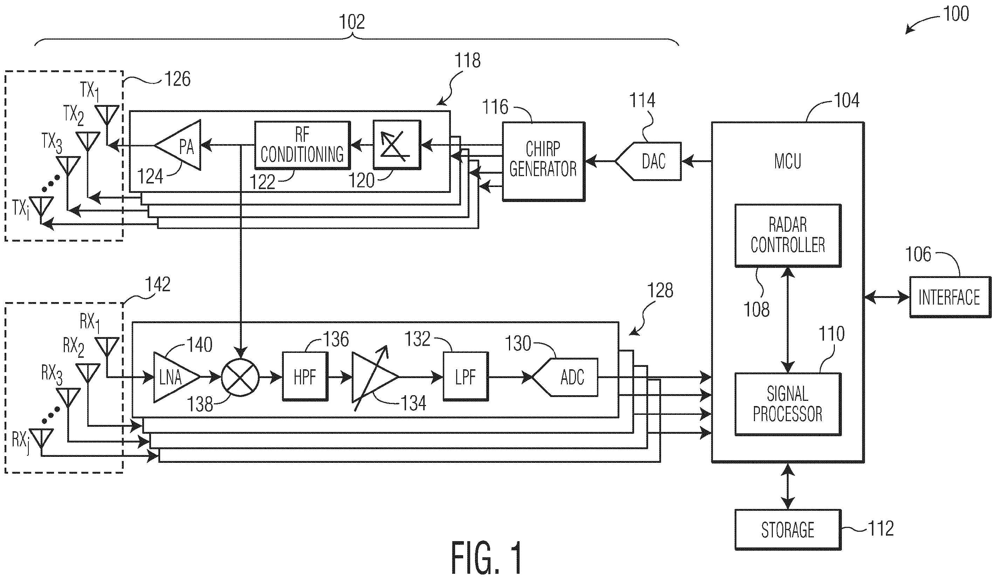

FIG. 1 shows a block diagram of a DDM MIMO automotive radar system 100 that includes a DDM MIMO radar device 102 connected to a radar microcontroller unit (MCU) 104. In one or more embodiments, the device 102 may be a linear frequency modulation (LFM) DDM MIMO radar device. In one or more embodiments, the DDM MIMO radar device 102 may be embodied as a line-replaceable unit (LRU) or modular component that is designed to be replaced quickly at an operating location. Similarly, the radar MCU 104 may be embodied as a line-replaceable unit (LRU) or modular component. Although a single or mono-static DDM MIMO radar device 102 is shown, it will be appreciated that additional distributed radar devices may be used to form a distributed or multi-static radar. In addition, the depicted radar system 100 may be implemented in integrated circuit form with the DDM MIMO radar device 102 and the radar MCU 104 formed with separate integrated circuits (chips) or with a single chip, depending on the application.

The radar device 102 includes transmitting antenna elements 126 (sometimes referred to herein as "transmit antennas 126") and receiving antenna elements 142 (sometimes referred to herein as "receive antennas 142") connected, respectively, to radio frequency (RF) transmitter (TX) modules 118 and receiver (RX) modules 128. Each transmit antenna 126 and TX module may be associated with a respective transmit channel of a group of transmit channels designated herein as $TX_1, TX_2, TX_3, ... TX_i$, where "i" is the total number of transmit (TX) channels. Each receive antenna 142 and RX module 128 may be associated with a respective receive channel of a group of receive channels designated herein as $RX_1$, $RX_2$, $RX_3$, ... $RX_j$, where "j" is the number of receive (RX) channels. As a non-limiting example, a radar device (e.g., the radar device 102) can include individual antenna elements (e.g., antenna elements 126) connected, respectively, to four transmitter modules (e.g., the transmitter modules 118) and sixteen receiver modules (e.g., the receiver modules 128). The numbers of transmitter and receiver antenna elements and modules are intended to be illustrative and not limiting, with other numbers of these elements being possible in one or more other embodiments, such as four transmitter modules 118 and six receiver modules 128, or a single transmitter module 118 and/or a single receiver module 128. The radar device 102 includes a chirp generator 116, which is configured to supply chirp input signals to the transmitter modules 118. To this end, the chirp generator 116 is configured to receive input program and control signals, including, as non-limiting examples, a reference local oscillator (LO) signal, a chirp start trigger signal, and program control signals, from the MCU 104 via a digital-to-analog converter 114. The chirp generator 116 is configured to generate chirp signals and send the chirp signals to the transmitter modules 118 for transmission via the transmitting antenna elements 126. In one or more embodiments, each transmitter module includes a phase rotator 120 (sometimes referred to herein as a "phase shifter 120") that is configured to apply phase coding to the chirp signals, where the phase rotator 120 is controlled by program control signals generated by the MCU 104. The phase rotator 120 may provide a uniform phase shift between transmitter modules 118 in one or more embodiments. The phase rotator 120 may alternatively provide each transmitter module 118 with the ability to implement progressive phase shifting using a non-uniform coding technique, in accordance with one or more other embodiments. Each transmitter module 118 includes an RF conditioning module 122 that is configured to filter the phase-coded chirp signals.

Each transmitter module 118 includes a power amplifier 124 configured to amplify the filtered, phase-coded chirp signal before they are provided to and transmitted via one or more corresponding transmitting antenna elements 126. By using each transmit antenna 126 to transmit progressively phase shifted sequences of chirp signals, each transmitter module 118 operates in a Doppler Division Multiplexing fashion with other transmitter modules of the transmitter modules 118 because they are programmed to simultaneously transmit identical waveforms on a phase-separated schedule. Herein, a transmitted chirp signal is sometimes referred to as a "transmit signal".

The radar signal transmitted by the transmitter antenna modules 118 may by reflected by an object or obstacle (this is sometime referred to in the field of automotive radar system as a "target object" which refers to a particular object about which the radar system is gathering information to provide appropriate driver assistance) in an environment of the radar device 102, and part of the reflected radar signal, sometimes referred to herein as a "return signal" or a "reflection", is received by the receiver antenna modules 128 at the radar device 102. At each receiver module 128, the received (radio frequency) antenna signal is amplified by a low noise amplifier (LNA) 140 and then fed to a mixer 138 where it is mixed with the transmitted chirp signal generated by the RF conditioning module 122. The resulting intermediate frequency signal is fed to a high-pass filter (HPF) 136. The resulting filtered signal is fed to a variable gain amplifier 134, which amplifies the signal before feeding it to a low pass filter (LPF) 132. This re-filtered signal is fed to an analog/digital converter (ADC) 130 and is output by each receiver module 128 (e.g., output to the signal processor 110 of the MCU 104) as a digital signal. In this way, the receiver modules 128 compress the target echo of various delays into multiple sinusoidal tones whose frequencies correspond to the round-trip delay of the echo.

In the radar system 100, the radar MCU 104 may be connected and configured to supply input control signals to the radar device 102 and to receive therefrom digital output signals generated by the receiver modules 128. In one or more embodiments, the radar MCU 104 includes a radar controller 108 and a signal processor 110, where either or both of which may be embodied as a micro-controller unit (MCU) or other processing unit. The radar controller 108 can receive data from the radar device 102 (e.g., from the receiver modules 128) and can control radar parameters of the radar device 102, such as frequency band, length of each radar frame, and the like via the DAC 114. For example, the DAC 114 may be used to adjust the radar chirp signals output from the chirp generator 116 included in the radar device 102. The signal processor 110 may be configured and arranged for signal processing tasks such as, but not limited to, object identification, computation of the distance or range to an object, computation of the radial velocity of an object, and computation of the DOA of signals reflected by an object, and the like. Herein, the term "DOA" or "direction of arrival" (sometimes referred to as "AoA" or "Angle-of-Arrival") refers to the angle of a signal (e.g., a radar signal) that is reflected by an object in the environment. The signal processor 110 can provide calculated values associated with such computations to a storage 112 and/or to other systems via an interface 106.

The interface 106 can enable the MCU 104 to communicate with other systems over local and wide area networks, the internet, automotive communication buses, and/or other kinds of wired or wireless communication systems, as non-limiting examples. In one or more embodiments, the MCU 104 can provide the calculated values over the interface 106 to other systems, such as a radar-camera-lidar fusion system; an automated driving assistance system including parking, braking, or lane-change assistance features; and the like. The storage 112 can be used to store instructions for the MCU 104, received data from the radar device 102, calculated values from the signal processor 110, and the like. Storage 112 can be any suitable storage medium, such as a volatile or non-volatile memory.

To control the transmitter modules 118, the radar controller 108 may, for example, be configured to generate transmitter input signals, such as program, control trigger, reference LO signal(s), calibration signals, frequency spectrum shaping signals (such as ramp generation in the case of FMCW radar). The radar controller may, for example, be configured to receive data signals, sensor signals, and/or register programming or state machine signals for RF (radio frequency) circuit enablement sequences. In one or more embodiments, the radar controller 108 may be configured to program the transmitter modules 118 with transmitter input signals to operate in a DDM fashion by progressively phase shifting the LFM chirps to be transmitted by the transmit antenna elements 126. In selected embodiments, the radar controller 108 is configured to progressively phase shift the LFM chirps that are output by the chirp generator 116 with co-prime-coded (CPC) encoding by programming the programmable phase rotator 120 prior to transmission. Each transmitter module 118 emits a transmit channel signal having a different CPC encoded LFM signal generated using a programmable slow-time phase rotator 120, such that the receiver modules 128 can condition the object return signals (i.e., return signals corresponding to reflections of transmit signals that are transmitted via the transmit antenna elements 126, reflected off of one or more objects, where the return signals are then received via the receive antenna elements 142) to generate digital domain signals which are processed by the radar MCU 104 to separate and identify the CPC-encoded transmit channel signals.

At each receiver module 128, digital output signals are generated from target return signals for digital processing by the signal processor 110 to construct and accumulate multiple-input multiple-output (MIMO) array vector outputs forming a MIMO aperture for use in computing plots or maps for DOA estimation and object tracks. In particular, in the signal processor 110, the digital output signals may be processed by one or more fast Fourier transform (FFT) modules or Discrete Fourier Transform (DFT) modules, such as a fast-time (range) FFT module which generates a range chirp antenna cube (RCAC) and a slow-time (Doppler) FFT module which generates a range-Doppler antenna cube. A per-channel DOA estimation module of the signal processor 110 may then perform a respective channel dimension FFT on each range bin of the range-Doppler antenna cube to produce a number of FFT or DFT output matrices (i.e., one per range bin of the range-Doppler antenna cube). A DDM decoder module of the signal processor 110 may then generate a decoded range-Doppler bit map (RDBM) based on the FFT or DFT output matrices, as will be described in more detail, below. The decoded RDBM may be further processed by the signal processor 110 to construct a DDM MIMO array vector which the signal processor 110 then processes to perform DOA estimation and object tracking. The MCU 104 may then output the resulting object tracks (e.g., via the interface 106) to other automotive computing or user interfacing devices for further process or display.

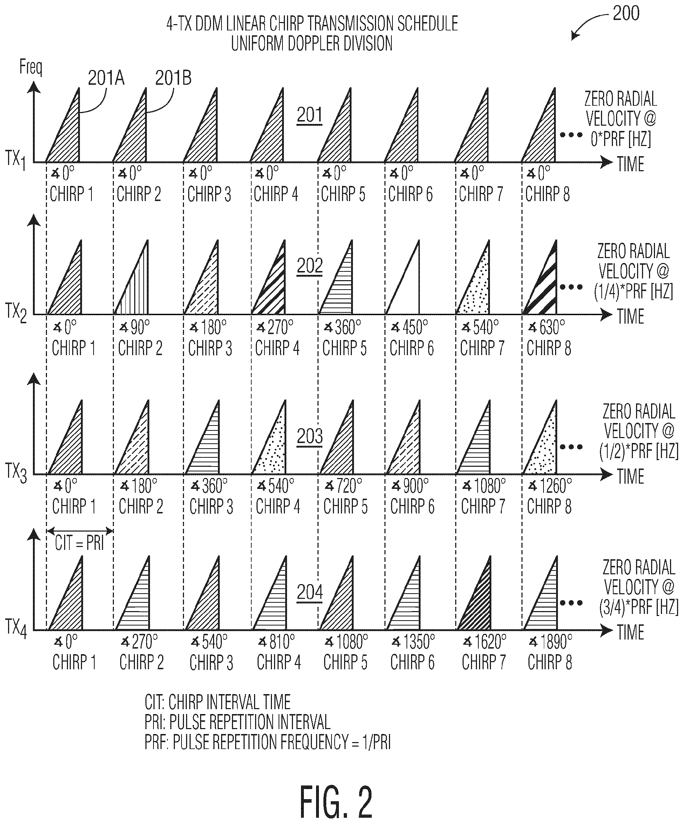

For a contextual understanding of the operation of a DDM MIMO radar system, such as the radar system 100 of FIG. 1, reference is now made to FIG. 2 which shows a timing diagram 200 illustrating the linear chirp transmission schedules 201, 202, 203, 204 of four transmitters (e.g., each respectively corresponding, in one or more embodiments, to a transmitter module 118 and transmit antenna element 126 of FIG. 1) using a uniform Doppler Division scheme. Each transmitter is associated with a respective transmit channel of the transmit channels $TX_1$-$TX_4$ and is programmed to simultaneously transmit a sequence of DDM linear chirp waveforms in a single radar transmission frame. Each transmitter transmits a linear chirp waveform (e.g., 201A, 201B) at a fixed and uniform pulse repetition frequency (PRF) rate which is the inverse of the pulse repetition interval (e.g., PRF=PRI$^{-1}$) or chirp interval time (e.g., PRF=CIT$^{-1}$). In addition, each transmitter encodes each chirp with an additional progressive phase offset by using the phase rotator in the front-end circuit. As a result of the progressive phase offset coding, each of the received chirps corresponding to reflections of radar signals originating from each distinct transmitter effectively has a distinct zero-radial velocity Doppler shift and the individual object detections can be associated with the corresponding transmitter from which the reflected radar signal originated, which is necessary for the correct functioning of the subsequent MIMO virtual array construction.

The location of the zero-radial velocity is controlled by the progressive phase offset applied to each transmitter's chirp based on the following equation:

$$f_{zrv,i} = \frac{A_i}{2\pi} \text{PRF [Hz]}$$

where $f_{\text{zrv},i}$ is the zero-radial velocity Doppler shift frequency of transmitter-i, and where $A_i$ is the progressive phase shift (radians) between two adjacent chirps. For example, in a 4-TX DDM MIMO radar system, each transmitter could be assigned the following progressive phase offsets and thus the zero-radial velocity frequencies:

$$TX_1: A_1 = 0 \;\rightarrow\; f_{zrv,1} = 0 \; [Hz];$$

$$TX_2: A_2 = \frac{\pi}{2} \;\rightarrow\; f_{zrv,2} = \frac{PRF}{4} \; [Hz];$$

$$TX_3 : A_3 = \pi \ \rightarrow \ f_{zrv,3} = \frac{PRF}{2} \ [Hz];$$

$$TX_4 : A_4 = \frac{3\pi}{2} \ \rightarrow \ f_{zrv,4} = \frac{3*PRF}{4} \ [Hz].$$

In the present example, this result is depicted with the first transmitter, for transmit channel $TX_1$, encoding its chirp waveforms with a progressive phase offset of 0 degrees; the second transmitter, for transmit channel $TX_2$, encoding its chirp waveforms with a progressive phase offset of 90 degrees; the third transmitter, for transmit channel $TX_3$, encoding its chirp waveforms 20 with a progressive phase offset of 180 degrees; and the fourth transmitter, for transmit channel $TX_4$, encoding its chirp waveforms with a progressive phase offset of 270 degrees. In a DDM MIMO radar system with uniform Doppler division, objects can be unambiguously associated to the correct transmitter and TX channel by judging its location within the sectorized Doppler spectrum, provided that the objects have true Doppler shifts within $\pm PRF/(2N_{ch})$ before applying DDM, where $N_{ch}$ is the number of DDM transmitter channels.

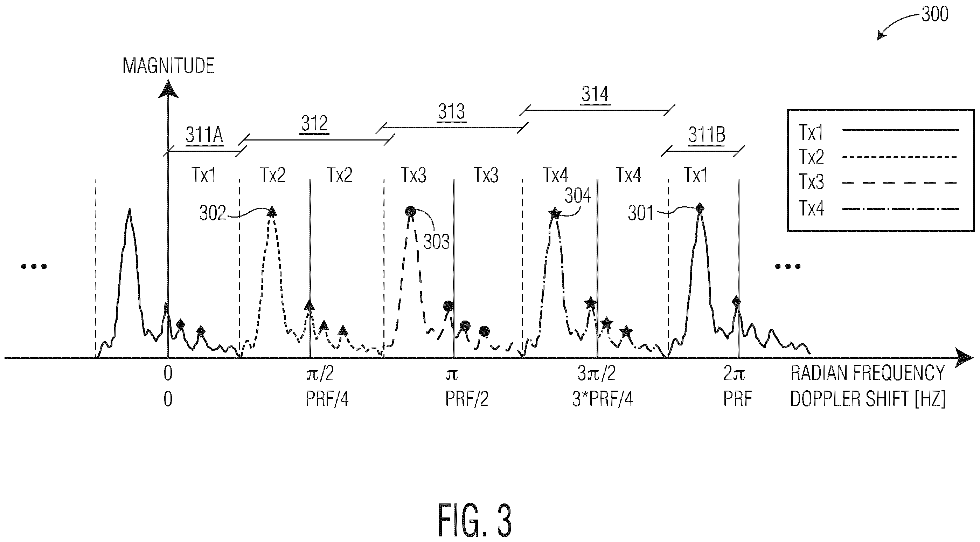

To illustrate the principle of Doppler-peak detection and transmitter association, reference is now made to FIG. 3 which depicts a plot of the Doppler spectrum as a function of the radian frequency (and Doppler shift) for a uniform DDM-MIMO radar system (e.g., an example embodiment of the radar system 100 of FIG. 1) where the maximum radial velocity of the objects does not exceed the allocated spectrum budget, resulting in unambiguous association of target peaks and transmit antenna. As depicted, each transmitter channel $TX_1$-$TX_4$ has a respective allocated spectrum section 311, 312, 313, 314 which is effectively centered around a corresponding zero-radial velocity frequency (e.g., $0, \pi/2, \pi,$ and $3\pi/2$). As a result, each object measurement 301, 302, 303, 304 having a true Doppler shift within $\pm PRF/(2N_{ch})$ of the zero-radial velocity frequency for each transmitter channel $TX_1$-$TX_4$ can be unambiguously associated to the correct transmitter by judging its location within the sectorized Doppler spectrum 300. This result holds true while the object's radial speed falls within the allocated spectral budget sections 311, 312, 313, 314 for each transmitter channel $TX_1$-$TX_4$. As shown, the spectral budget section 311 for the transmitter channel $TX_1$ may be split into sections 311A, occurring at the beginning of the period, and 311B, occurring at the end of the period.

With existing fast-chirp automotive radar front-end monolithic microwave integrated circuits (MMICs), the fastest chirp signals are limited by a Chirp Interval Time (CIT) that is generally no shorter than a period of approximately 15 microseconds. As a result, when a vehicle is within a dynamic drive scene, where other automobiles may normally be travelling at about 100 km/hr, the extent of the Doppler spectrum bandwidth is sufficient only for very few transmitters. While more transmitters and DDM transmitter channels could be supported without incurring ambiguity by significantly shortening the CIT to a period on the order of microseconds, it should be noted that such ultra-short chirps provide additional cost and complexity to the radar systems, given such high dynamic drive conditions.

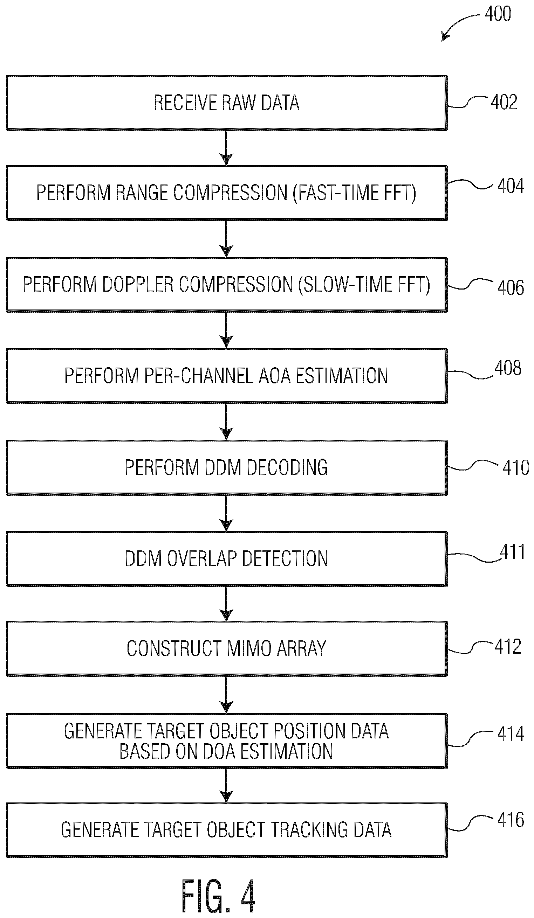

FIG. 4 shows an illustrative process flow for a method 400 in accordance with the present disclosure by which raw data corresponding to sampled return signals corresponding to reflections of transmitted signals (e.g., chirps transmitted in accordance with a DDM scheme, such as that shown in the timing diagram 200 of FIG. 2) that are reflected by objects in an environment around a DDM-MIMO radar system (e.g., a vehicle radar system). As described herein, method 400 is configured to detect signal overlap occurring with the radar system's received signals that are processed to generate RDBMs.

The method 400 may be performed using either or both of a radar controller and signal processor of a radar MCU, in accordance with one or more embodiments. The method 400 is described with reference to elements of the radar system 100 of FIG. 1. However, it should be understood that this is illustrative and not limiting, at least in that other suitable radar systems may be used to carry out the method 400 in one or more other embodiments.

At block 402, the signal processor 110 of the MCU 104 of the radar system 100 receives raw sample data (sometimes referred to as "ADC samples") from one or more ADCs 130 of the receiver modules 128. These ADC samples may be output by the ADCs 130 as digital signals. These ADC samples represent received signals (sometimes referred to as "reflected signals" or "return signals") corresponding to reflections of transmit signals (i.e., chirps) transmitted by the transmitter modules 118 via the transmit antenna elements 126 (e.g., in accordance with a DDM scheme, such as the DDM scheme shown in the timing diagram 200 of FIG. 2), where the transmit signals are reflected off of one or more objects in the environment of the radar system 100 (e.g., other vehicles, trucks, roadway obstacles). The return signals are received by the receiver modules 128 via the receive antenna elements 142.

At block 404, the signal processor 110 performs range compression of the raw ADC samples by performing a fast-time FFT or DFT on the raw ADC samples, for example. The signal processor 110 may generate a range chirp antenna cube (RCAC) as an output of this fast-time FFT or DFT.

At block 406, the signal processor 110 performs Doppler compression of the RCAC by performing a slow-time FFT or DFT on the RCAC, for example. The signal processor 110 may generate a range-Doppler antenna cube as an output of this slow-time FFT or DFT. The range-Doppler antenna cube may be a three-dimensional array having dimensions $m \times n \times p,$ where $m$ represents the number of Doppler bins, $n$ represents the number of range bins, and $p$ represents the number of RX channels (e.g., corresponding to the number of receive antenna elements 142 or the number of receiver modules 128) represented in the range-Doppler antenna cube. Herein, $p$ is sometimes referred to as the "channel dimension" in the context of the range-Doppler antenna cube and range bin matrices extracted therefrom.

Each element of the range-Doppler antenna cube may encode the complex amplitude of a received signal for a particular range bin, Doppler bin, and RX channel. In one or more embodiments, a given RX channel slice of the range-Doppler antenna cube may be represented as a two-dimensional (2D) array of range-Doppler cells, with the complex amplitude of each cell corresponding to the average complex amplitude within a region bound, in Cartesian space, by corresponding pairs of iso-Doppler lines and iso-range lines. That is, the boundaries of each range bin are defined by a corresponding pair of iso-range lines and the boundaries of each Doppler bin are defined by a corresponding pair of iso-Doppler lines. Each range-Doppler cell corresponds to a respective Doppler bin and range bin pair.

Because the transmitter modules 118 transmit chirps simultaneously in a DDM-MIMO radar system, information from all TX channels is represented in each element in the range-Doppler antenna cube. Each range bin represents ranges or distances between the radar system and an object. Each Doppler bin represents Doppler shift values corresponding to velocities at which an object may be traveling (e.g., relative to the ego velocity of the radar system 100). Such velocities may be calculated based on the determined Doppler shift associated with the object.

At block 408, the signal processor 110 performs per-channel (e.g., per-RX-channel) DOA estimation using the range-Doppler antenna cube. In one or more embodiments, the signal processor 110 performs the per-channel DOA estimation by extracting range bins from the range-Doppler antenna cube and performing a channel dimension FFT or DFT on each range-Doppler cell of the extracted range bin to generate FFT or DFT output matrices (i.e., with each FFT or DFT output matrix corresponding to a respective range bin of the range-Doppler antenna cube).

At block 410, the signal processor 110 performs DDM decoding of the range-Doppler antenna cube based on the FFT or DFT output matrices generated by the per-channel DOA estimation performed at block 408 to generate a decoded RDBM. At block 411, the RDBM is processed, as described herein, to determine whether the RDBM encodes values associated with overlapped signals.

At block 412, the signal processor 110 constructs a virtual MIMO array based on the decoded RDBM and the range-Doppler antenna cube. At block 414, the signal processor 110 generates object position data based on DOA estimation using the virtual MIMO array. At block 416, signal processor 110 generates object tracking data based on the object position data.

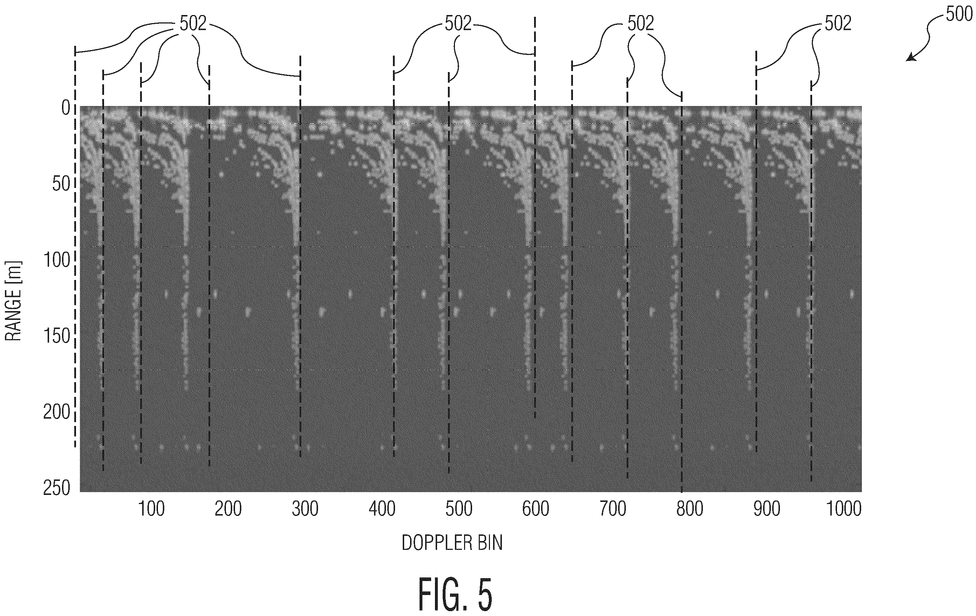

During operations, the signal processor 110 of the radar system 100 generates a range bin matrix from the range-Doppler antenna cube (e.g., generated at block 404, above) and performs a channel dimension FFT on each range-Doppler cell of the extracted range bin matrix to generate an FFT output matrix. That FFT output matrix is used to generate a Doppler bin maxima array, which represents per-column maxima detected in the FFT output matrix. The maxima array can then be combined to generate a coherently integrated range-Doppler matrix (RDM). Herein, an RDM may be distinguished from an RDBM in that an RDBM includes a matrix or 2D array of binary values (e.g., 0's and 1's), while an RDM can include a matrix or 2D array of signal amplitudes. FIG. 5 shows an example of such a coherently integrated RDM 500. In the coherently integrated RDM 500 data from each TX channel is encoded according to respective DDM codes for each TX channel, such that each set of TX channel data is represented in the RDM 500 and is offset by a predetermined number of Doppler bins, where the offset is different for each TX channel (e.g., as defined by the corresponding DDM code). Data corresponding to the different transmitters is represented in the multiple doppler bins 502 depicted in FIG. 5. For example, data corresponding to a first TX channel, $TX_1$, representing a velocity of around -30 m/s is disposed in the first Doppler bin 502. Data corresponding to a second TX channel, $TX_2$, representing a velocity of around -28 m/s is disposed in a second Doppler bin 502.

In an ideal coherently integrated RDM, there is sufficient Doppler offset between the various multiple doppler bins such that the signals associated with the different transmit channels depicted therein do not overlap with one another. However, in situations involving higher-speed objects (such as other vehicles), the signals associated with a particular TX channel, which would not ordinarily overlap signals in other TX channels and would be constrained to a particular Doppler bin with the RDM, may extend and overlap, thereby corrupting, the signals associated with other TX channels in other Doppler bins.

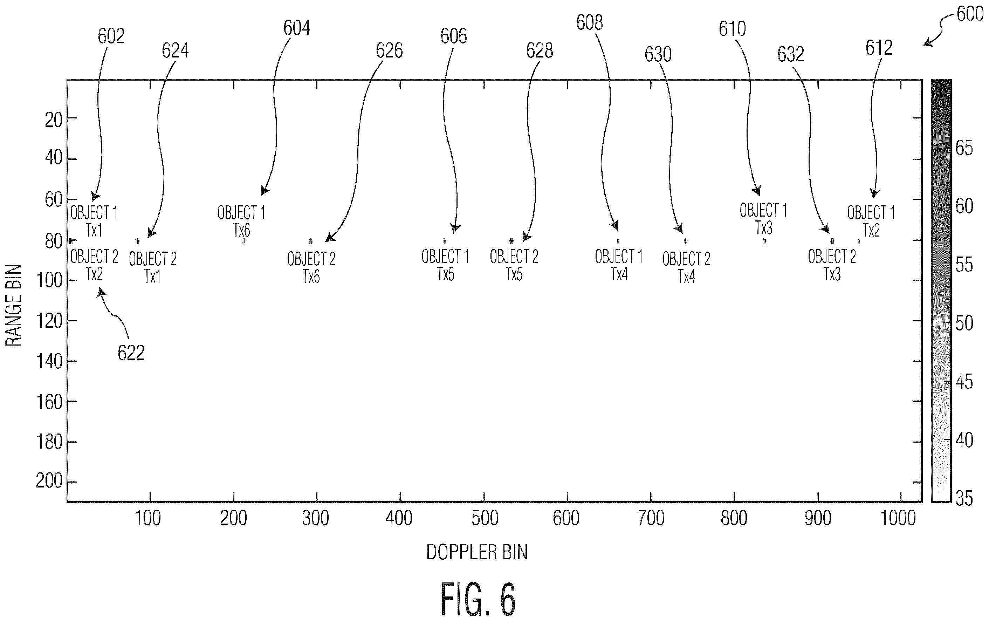

This phenomenon is depicted in FIG. 6, which depicts a coherently integrated RDM 600 for processed received radar signals for a 6-transmitter, 8-receiver radar system for an environment in which two objects are present. As illustrated, the signals 602, 604, 606, 608, 610, and 612 that are associated with the six transmit channels for the first object ("object 1") are all separated from one another in the Doppler dimension (i.e., along the horizontal axis). Similarly, the signals 622, 624, 626, 628, 630, and 632 that are associated with the six transmit channels for the second object ("object 2") are all separated from one another in the Doppler dimension (i.e., along the horizontal axis).

However, again as illustrated in FIG. 6, the signal associated with the first transmit channel TX1 and the first object (i.e., signal 602) overlaps in the Doppler domain with the signal associated with the second transmit channel TX2 and the second object (i.e., signal 622). This overlap can interfere with an accurate determination of a DOA of object 1 and/or object 2 based upon the RDM data depicted in FIG. 6

To further illustrate the RDM data of FIG. 6, Table 1, below summarizes the Doppler bin positions of the signals associated with the 6 transmit channels TX for each of object 1 and 2. As illustrated, the signal associated with transmit channel TX1 and object 1 and the signal associated with transmit channel TX2 and object 2 are both at Doppler bin 6, this can result in distortion and in inaccuracies when estimating the DOA angles for object 1 and/or object 2.

Table 1

|          | Tx1 | Tx2 | Tx3 | Tx4 | Tx5 | Tx6 |
|----------|-----|-----|-----|-----|-----|-----|
| Object 1 | 6   | 950 | 838 | 662 | 454 | 214 |
| Object 2 | 86  | 6   | 918 | 742 | 534 | 294 |

To illustrate that signal overlap mathematically, ideal steering vectors for objects 1 and 2 may be expressed as follows where v1 is the ideal steering vector for the received signals associated with object 1 and v2 is the ideal steering vector for the received signals associated with object 2.

$$v1 = [x^1_{1,1}, x^1_{1,2}, x^1_{1,3}, x^1_{1,4}, x^1_{1,5}, x^1_{1,6}, x^1_{1,7}, x^1_{1,N},$$
$$x^1_{2,1}, x^1_{2,2}, x^1_{2,3}, x^1_{2,4}, x^1_{2,5}, x^1_{2,6}, x^1_{2,7}, x^1_{2,N},$$
$$...$$
$$x^1_{M,1}, x^1_{M,2}, x^1_{M,3}, x^1_{M,4}, x^1_{M,5}, x^1_{M,6}, x^1_{M,7}, x^1_{M,N}] \tag{1}$$

$$v2 = [x^2_{1,1}, x^2_{1,2}, x^2_{1,3}, x^2_{1,4}, x^2_{1,5}, x^2_{1,6}, x^2_{1,7}, x^2_{1,N},$$
$$x^2_{2,1}, x^2_{2,2}, x^2_{2,3}, x^2_{2,4}, x^2_{2,5}, x^2_{2,6}, x^2_{2,7}, x^2_{2,N},$$
$$...$$
$$x^2_{M,1}, x^2_{M,2}, x^2_{M,3}, x^2_{M,4}, x^2_{M,5}, x^2_{M,6}, x^2_{M,7}, x^2_{M,N}] \tag{2}$$

In equations (1) and (2), the elements $x^j_{m,n}$ represents the complex signal value (e.g., from the RDM data generated at block 410 of FIG. 4) for transmit channel m, receive channel n, and object j. As such, in this example (i.e., involving two objects) if the signal associated with the transmit channel TX1 and object 1 overlaps with the signal associated with transmit channel TX2 and object 2, the updated steering vectors v1' and v2' for object 1 and object 2 with that overlap, respectively becomes:

$$v1' = [\mathbf{x^1_{1,1} + x^2_{2,1}}, \mathbf{x^1_{1,2} + x^2_{2,2}}, \mathbf{x^1_{1,3} + x^2_{2,3}}, \mathbf{x^1_{1,4} + x^2_{2,4}}, \mathbf{x^1_{1,5} + x^2_{2,5}}, \mathbf{x^1_{1,6} + x^2_{2,6}}, \mathbf{x^1_{1,7} + x^2_{2,7}}, \mathbf{x^1_{1,N} + x^2_{2,N}},$$
$$x^1_{2,1}, x^1_{2,2}, x^1_{2,3}, x^1_{2,4}, x^1_{2,5}, x^1_{2,6}, x^1_{2,7}, x^1_{2,N},$$
$$...$$
$$x^1_{M,1}, x^1_{M,2}, x^1_{M,3}, x^1_{M,4}, x^1_{M,5}, x^1_{M,6}, x^1_{M,7}, x^1_{M,N}] \tag{3}$$

$$v2' = [x^2_{1,1}, x^2_{1,2}, x^2_{1,3}, x^2_{1,4}, x^2_{1,5}, x^2_{1,6}, x^2_{1,7}, x^2_{1,N},$$
$$\mathbf{x^2_{2,1} + x^1_{1,1}}, \mathbf{x^2_{2,2} + x^1_{1,2}}, \mathbf{x^2_{2,3} + x^1_{1,3}}, \mathbf{x^2_{2,4} + x^1_{1,4}}, \mathbf{x^2_{2,5} + x^1_{1,5}}, \mathbf{x^2_{2,6} + x^1_{1,6}}, \mathbf{x^2_{2,7} + x^1_{1,7}}, \mathbf{x^2_{2,N} + x^1_{1,N}},$$
$$...$$
$$x^2_{M,1}, x^2_{M,2}, x^2_{M,3}, x^2_{M,4}, x^2_{M,5}, x^2_{M,6}, x^2_{M,7}, x^2_{M,N}] \tag{4}$$

The resulting overlap can generate significant distortion of the steering vectors associated with both objects as depicted by the modified terms that are bolded in expressions (3) and (4).

This distortion may make the signals associated with transmit channel TX1 for object 1 and transmit channel TX2 for object 2 unusable for reliable MIMO array construction and, ultimately, DOA estimation. It can be difficult to detect this overlap, which may occur in several manners (i.e., ranging from full overlap in which the overlapping signals are present within the same Doppler bin to partial overlap resulting from signals in adjacent Doppler bins). Detecting this overlap can be made more difficult in circumstances in which overlap results from signals associated with three or more objects.

To mitigate this problem, the present disclosure provides an approach for detecting such overlap, either due to direct overlap or adjacent signals, so that the overlapping data can be ignored or, alternatively, modified or allocated a reduced weighting to account for the signal overlap.

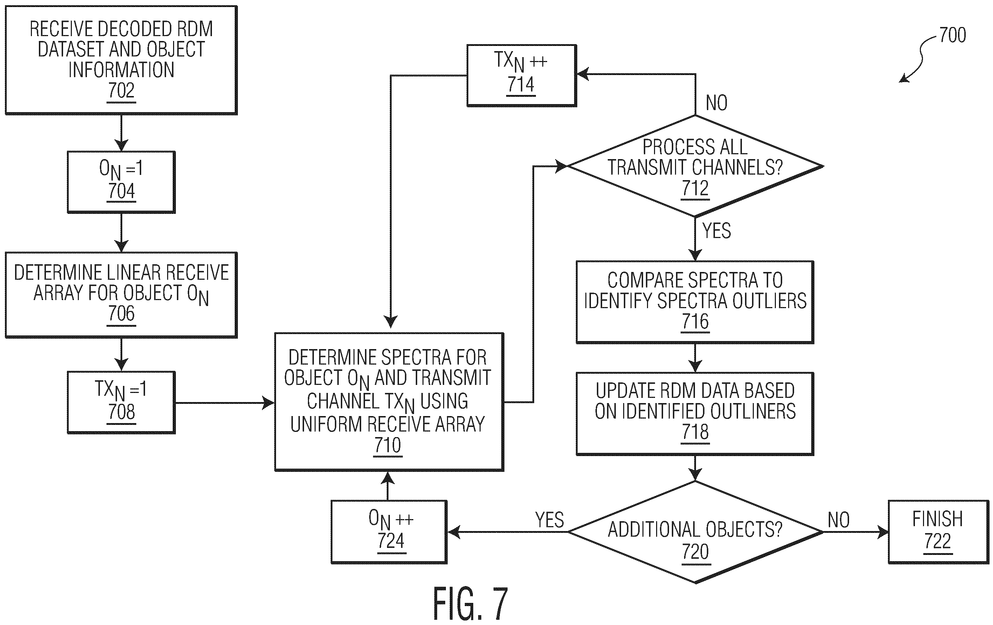

Specifically, FIG. 7 is a flow chart depicting method 700 for detecting Doppler spectrum overlap in DDM MIMO radar systems in accordance with the present disclosure. Method 700 may be implemented to execute all or a portion of block 411 described above with respect to FIG. 4. Method 700 may be performed using either or both a radar controller and signal processor of a radar MCU (e.g., radar controller 108 and/or signal processor 110 of FIG. 1), in accordance with one or more embodiments, or with other hardware components configured to process signals. As such, method 700 is described with reference to elements of the radar system 100 of FIG. 1. However, it should be understood that this is illustrative and not limiting, at least in that other suitable radar systems may be used to carry out the method 700 in one or more other embodiments.

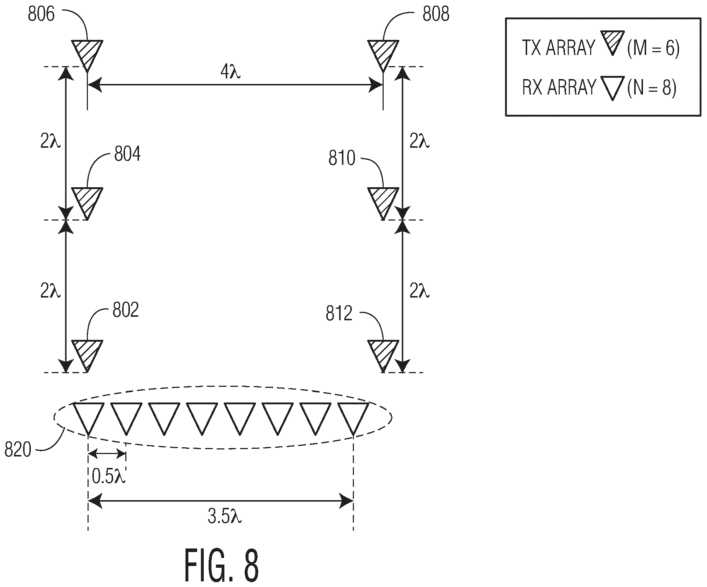

Method 700 is described with respect to a specific embodiment of a radar system (e.g., radar system 100) that includes 6 transmit antennas and 8 receive antennas and signal processing with respect to two objects. In this embodiment, the antennas are arranged in a particular geometrical arrangement with uniform spacing that enables DDM MIMO processing of received signals. The geometrical spacing is depicted in FIG. 8. Specifically, FIG. 8 depicts the geometrical arrangement of transmit and receive antennas in an example radar system. Specifically, the six transmit antennas 802, 804, 806, 808, 810, and 812 are placed in an arrangement in which the transmit antennas 802, 804, 806 are arranged in a first linear arrangement with the antennas 802, 804, 806 generally separated by a distance of two wavelengths ($2*\lambda$). Similarly, transmit antennas 808, 810, 812 are arranged in a second linear arrangement with the antennas 808, 810, 812 generally separated by a distance of two wavelengths ($2*\lambda$). The two linear arrangement of antennas 802, 804, 806 and 808, 810, 812 are separated from one another by a distance of four wavelengths ($4*\lambda$), as illustrated.

The receive antennas 820 are arranged in a single linear arrangement of overall length of three and half wavelengths ($3.5*\lambda$) with spacing between the individual receive antennas 820 of half a wavelength ($0.5*\lambda$). As such, the spacing between the various receive antennas 820 is considered uniform in that each receive antenna 820 is separate from its nearest neighbors by a distance that is uniform for all receive antennas 820. In the description of FIG. 8, the wavelength distance is considered to be a wavelength of signals configured to be transmitted and received by the antenna arrangement depicted in FIG. 8.

Returning to method 700, at block 702, an RDM is received (e.g., as an output of block 410 of method 400, described above). The RDM is a multi-dimensional array of data that includes a plurality of complex signal values derived from reflection signals received by the radar system's receive antennas. Each complex value in the RDM is associated with a particular Doppler bin (where the Doppler bins in the RDM are associated with particular TX channels), range bin, and RX channel.

At block 704 an object counter is initialized to a value of 1, designating a first object out of a set of identified objects.

At block 706, using the RDM received at block 702, a receive subarray is determined for the current object $O_N$ using the RDM. The receive linear subarray is a multidimensional array extracted from RDM and includes signal data associated with a particular object across different receiver channels RX. Specifically, after signal processing, such as range and Doppler processing, and constant false alarm rate (CFAR) detection, the range and Doppler bin of each identified object are known. As such, for each object, the object's steering vectors are extracted from the RDMs using the object's own range and Doppler bin to generate the receive subarrays.

In this particular example, receive subarray is considered linear in that the geometrical spacing between the receive antennas of the example radar system is consistent - all antenna units are spaced from one another by the same distance, as illustrated by the receive antennas 820 of FIG. 8. In embodiments of the present system in which method 700 is utilized in conjunction with a radar system having a non-linear receive antenna configuration, a number of different approaches may be utilized to generate the linear receive subarray of the present block. For example, in a radar system having multiple receive antennas where a subset of the antennas are separated from one another by a uniform distance, the unform receive subarray may be constructed by only extracting values from the RBM for those evenly spaced antennas. Alternatively, zero-filling or other advanced interpolation or reconstruction techniques may be used to generate zero-valued regions of the receive subarray in which receive antennas are missing or otherwise non-uniformly spaced from the values for the other receive antennas. In method 700 it is generally preferred that the receive subarray being processed be linear because that configuration can be beneficial in that it enables a one-dimensional FFT (a simpler mathematical operation than executing multidimensional FFTs) to be executed on the data in the linear receiver array to generate certain output data such azimuth spectrum or elevation spectrum.

At block 708, having generated the uniform receive subarray, a transmit channel counter $TX_N$ is initialized to a value of 1. The method then, at block 710, for target object $O_N$ and transmit channel $TX_N$, calculates a spectra using the uniform receive subarray. Typically, this will involve executing an FFT on the data in the uniform receive subarray associated with transmit channel TXrr. In a specific embodiment, this involves determining a frequency-domain representation of the data in the uniform receive subarray that is associated with a particular transmit channel TX, such as by execution of a fast Fourier transform (FFT) on the data. However, as is known in the art, other approaches for calculating spectra based upon input data may be utilized, such as Welch's method, autoregressive model estimation, MUSIC (Multiple SIgnal Classification), IAA (Iterative Adaptive Approach), and the like.

At block 712 a determination is made as to whether additional transmit channels are available. If so, the transmit channel counter $TX_N$ is incremented at block 714 and the method returns to block 710 to determine another spectrum for that transmit channel.

At the conclusion of the control loop implemented by blocks 710, 712, and 714, a plurality of spectra have been calculated, where the spectra include frequency-domain representations of the data in the uniform receive subarray for the current object $O_N$ for each transmit channel TX. For a radar system having M transmit antennas and N transmit channels, therefore, the following M FFTs could be executed for each object pursuant to blocks 710, 712, and 714.

$$FFT\{x_{1,1}^1 + x_{2,1}^2, x_{1,2}^1 + x_{2,2}^2, x_{1,3}^1 + x_{2,3}^2, x_{1,4}^1 + x_{2,4}^2, x_{1,5}^1 + x_{2,5}^2, x_{1,6}^1 + x_{2,6}^2, x_{1,7}^1 + x_{2,7}^2, x_{1,N}^1 + x_{2,N}^2\}$$

$$FFT\{x_{2,1}^1, x_{2,2}^1, x_{2,3}^1, x_{2,4}^1, x_{2,5}^1, x_{2,6}^1, x_{2,7}^1, x_{2,N}^1\}$$

$$...$$

$$FFT\{x_{M,1}^1, x_{M,2}^1, x_{M,3}^1, x_{M,4}^1, x_{M,5}^1, x_{M,6}^1, x_{M,7}^1, x_{M,N}^1\}$$

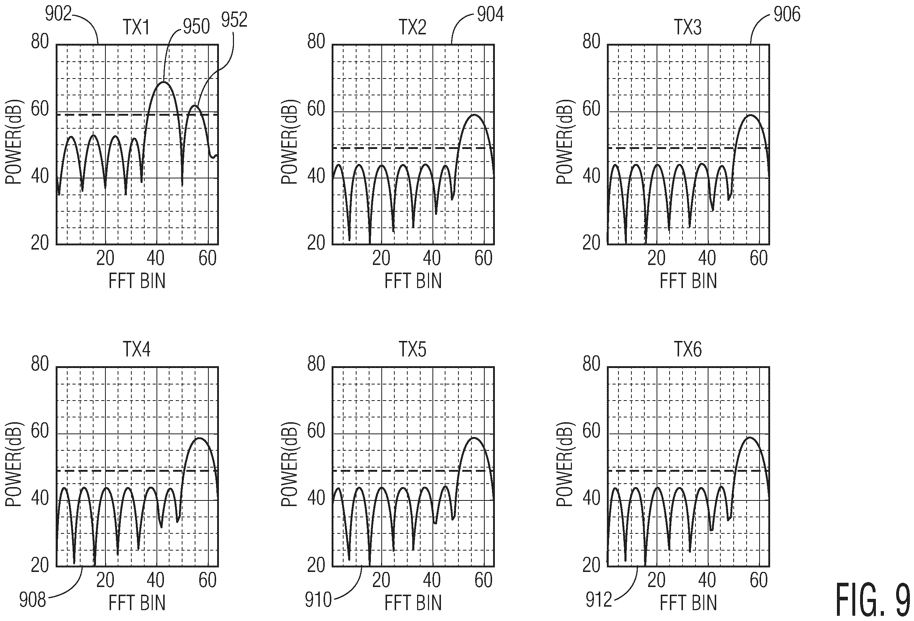

To illustrate, FIG. 9 depicts example spectra that may be generated for a first object based on an RDM including signals associated with a number of transmit channels. In the example depicted in FIG. 9 there are six charts 902, 904, 906, 908, 910, and 912 depicting the spectra associated with six different transmit channels TX. As illustrated, the horizontal axis of each chart 902, 904, 906, 908, 910, and 912 depicts a frequency or FFT bin, and the vertical axis of each chart 902, 904, 906, 908, 910, and 912 represents the power (in dB) of the signal associated the corresponding frequency bin. In each spectra, the frequency bin associated with the largest peak in the spectra is associated with the object, while the peaks having lesser power are associated with side lobes, noise, or other signal interference.

In a vehicle radar system application exhibiting no Doppler overlap between the signals associated with different object, the spectra generated by blocks 710, 712, and 714 of method 700 would generally exhibit only a single large peak indicating the frequency bin associated with a single object. Furthermore, the spectra associated with each transmit channel TX will be very similar and exhibit little or no interference.

In this example, however, where the radar signals being processed involve two objects generating reflected signals that exhibit some degree of Doppler overlap, it can be seen that in the spectra of FIG. 9, chart 902 depicts a spectrum that is different than the spectra of the remaining charts. Specifically, chart 902 exhibits two distinct large peaks 950 and 952, while the other spectra only depict a single large peak. The double peak depicted in chart 902, which is not present in the other charts 904, 906, 908, 910, and 912, indicates that there is Doppler overlap in the signals being processed to generated chart 902 and that the signal associated with the transmit channel TX that generated the spectrum are distorted due to that Doppler overlap.

Returning to method 700, once spectra have been generated for each transmit channel for the current object Orr, at block 712 a determination is made that no additional transmit channels remain. The method then moves to block 716 in which the spectra generated for the current object $O_N$ are analyzed to identify an outlier spectra, which, as described above, indicates the signal associated with the transmit channel of that spectrum is distorted due to Doppler overlap.

The identification of a so-called outlier spectra may be performed using any suitable manner for identifying a spectra that is non-trivially different from the other spectra. In an embodiment, for example, the identification of the outlier spectrum may involve analyzing each spectra to determine a number of local peaks contained within each spectra (e.g., using conventional peak-detections algorithms such neighboring value comparison, where a local peak or local maximum is a location whose value is not smaller than both of that value's neighboring values) and then determining the spectrum that includes a different number of peaks than the other spectra, which is designated the outlier spectra. Other approaches for detecting the outlier spectra may involve computing cross-correlations between pairs of the spectra, to identify a spectrum that has the lowest cross-correlation to the other spectra, which would indicate that spectrum is the outlier. Similarly, machine learning approaches could be utilized to analyze the spectra to determine, based upon learned model constraints, which of a set of spectra is the outlier.

In one specific approach, the spectra are each analyzed to determine a number of local peaks present within each spectra. For example, Table 2, below, lists the local peak information for each of the six spectra depicted in FIG. 9. Specifically, local peaks are defined, where the peak has a peak magnitude is above a particular threshold which, in this example, is 10 decibels (dB) below the maximum value of the spectra, which is illustrated by the horizontal dashed lines on charts 902, 904, 906, 908, 910, and 912 of FIG. 9. In various embodiments, the threshold may be predefined value that is selected based upon attributes of the radar system or user preferences.

Table 2

| Peak Info | | Tx2 | Tx3 | Tx4 | Tx5 | Tx6 |
|---|---|---|---|---|---|---|
| Number of peaks | 2 | 1 | 1 | 1 | 1 | 1 |
| Frequency Bins | 43,55 | 57 | 57 | 57 | 57 | 57 |

As illustrated by Table 2, across all spectra there are three frequency bins that contain local peaks - bin 43, 55 and 57. Frequency bin 43 contains a local peak only once across all spectra (i.e., in chart 902 associated with transmit channel Tx1), frequency bin 55 only contains a local peak in the spectra associated with transmit channel Tx1 (again, as depicted in chart 902), frequency bin 57, however, contains a local peak five different times in the spectra associated with transmit channel, Tx2, Tx3, Tx4, Tx5, and Tx6 (i.e., as illustrated by charts 904, 906, 908, 910, and 912). A threshold value can then be determined, where the threshold value specifies a particular number of local peak appearances (e.g., appearances greater than 3, in this example) that are required across the spectra to constitute a 'true' peak and not a peak attribute to Doppler overlap for a particular transmit channel. The appearance threshold is a predefined value that may be selected by a user or designer of the radar system. In some embodiments, however, the threshold may be set equal to about 50% of the number of transmit channels in the radar system. In that case, if local peaks occur in a particular frequency bin in fewer than 50% of the spectra for the available transmit channels, those local peaks can be attributes to Doppler overlap and discarded or ignored as described herein. However, if a local peak appears in a particular frequency bin in more than 50% of the spectra for the available transmit channel, that local peak is likely associated with an object signal and is not attributable to Doppler overlap. In that case, those local peaks are retained and used for MIMO array processing. Accordingly, with that threshold selected, a true object peak can be defined as a local peak that appears in the same frequency bin over the threshold number of times in different spectra. If a particular frequency bin satisfies those requirements for local peaks across the spectra, then the various spectra that contain a local peak in that bin location can be determined to be associated with non-Doppler overlapped signals - that is, those spectra contain 'true' peaks. The other spectra (e.g., that contain multiple local peaks found in frequency bins that are not associated with local peaks in the other spectra) can be designated as outliers as their peaks are likely cause by Doppler overlapped signals.

At block 718, the RDM is updated based on the identified outlier spectra. Specifically, the values in the RDM associated with object $O_N$ and the transmit channels TX associated with the outlier spectra may be zeroed-out, or otherwise modified to generate a corrected RDM that reduces the effect of the Doppler-overlapped signal associated with those particular transmit channels TXs. In other embodiments, instead of zeroing-out those values, when the RDM is processed to generate the corrected RDM, which is used (e.g., at block 412) to generate the MIMO array data utilized for DOA estimation, generating the corrected RDM may involve allocating particular weighting values to the values in the RDM associated with that transmit channel TX to reduce the effect of those values on the ultimate MIMO array determination, thereby reducing the effect of the data values associated with Doppler overlapped signals.

At block 720 a determination is made as to whether additional objects exist (e.g., based upon output data of block 410 of method 400). If so, at block 722 the counter $O_N$ is incremented and the method return to block 710 to generate a new set of spectra for the new object.

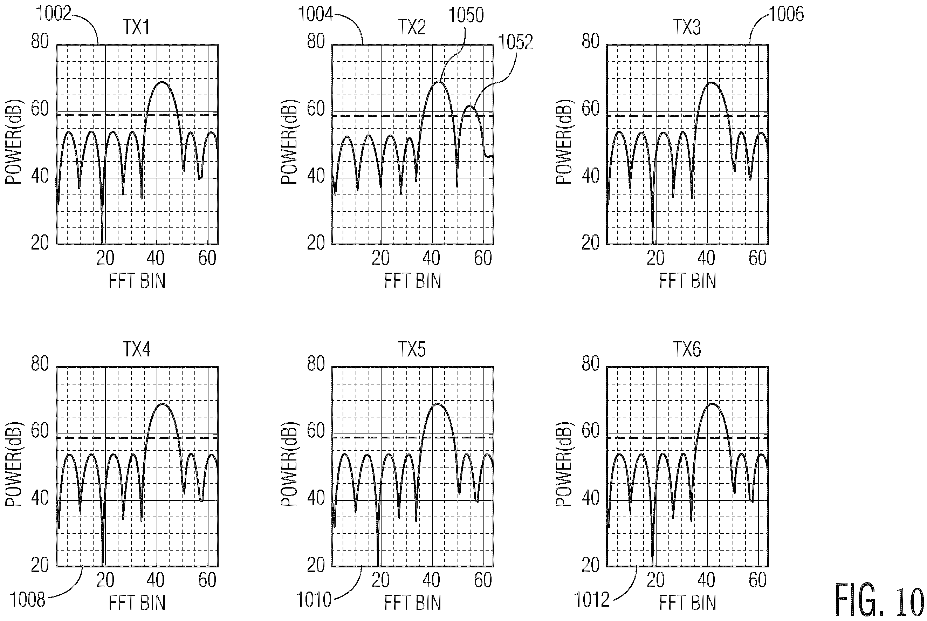

In the present example in which the RDM encodes data for two objects, FIG. 10 depicts example spectra that may be generated for the second object for a number of transmit channels. In the example depicted in FIG. 10 there are six charts 1002, 1004, 1006, 1008, 1010, and 1012 depicting the spectra associated with six different transmit channels TX.

As illustrated, the horizontal axis of each chart 1002, 1004, 1006, 1008, 1010, and 1012 depicts a frequency or FFT bin, and the vertical axis of each chart 1002, 1004, 1006, 1008, 1010, and 1012 represents the power (in dB) of the signal associated the corresponding frequency bin. In each spectra, the frequency bin associated with the largest peak in the spectra is associated with the object, while the peaks having lesser power are associated with side lobes, noise, or other signal interference.

Due to signal Doppler overlap, it can be seen that in the spectra of FIG. 10, chart 1004 associated with transmit channel Tx2 depicts a spectra that is different than the spectra depicting in the remaining charts. Specifically, chart 1004 exhibits two distinct large peaks 1050 and 1052, while the other spectra only depict a single large peak. The double peak depicted in chart 1004, that is not present in the other charts 1002, 1006, 1008, 1010, and 1012 indicates that there is Doppler overlap in the signals being processed to generated chart 1004 and that the signal associated with the transmit channel Tx2 that generated that chart are distorted due to that Doppler overlap.

Returning to method 700, therefore, once spectra have been generated for the current object $O_N$ (here, the second object) for all transmit channels, at block 712 no additional transmit channel remain, and the method moves to block 716 in which the spectra generated for the second object are analyzed to identify outlier spectra.

In one embodiment, the spectra are each analyzed to determine a number of local peaks present within each spectra. For example, Table 3, below, lists the local peak information for each of the six spectra depicted in FIG. 10. Specifically, local peaks are defined, where the peak has a peak magnitude above a particular threshold which, in this example, is 10dB less than the maximum value of the spectra, which is illustrated by the horizontal dashed lines on charts 1002, 1004, 1006, 1008, 1010, and 1012 of FIG. 10. In various embodiments, the threshold may be predefined value that is selected based upon attributes of the radar system or user preferences.

*Table 3*

| Peak Info | Tx1 | Tx2 | Tx3 | Tx4 | Tx5 | Tx6 |
|---|---|---|---|---|---|---|
| Number of peaks | 1 | 2 | 1 | 1 | 1 | 1 |
| Locations | 42 | 43,55 | 42 | 42 | 42 | 42 |

As illustrated by Table 3, across all spectra, there are three frequency bins that contain local peaks - bin 42, 43 and 55. Frequency bin 43 contains a local peak only once across all spectra (i.e., in chart 1004 associated with transmit channel Tx2), frequency bin 45 only contains a local peak in the spectra associated with transmit channel Tx2 (again, as depicted in chart 1004), frequency bin 42, however, contains a local peak five different times in the spectra associated with transmit channels Tx1, Tx3, Tx4, Tx5, and Tx6 (i.e., as illustrated by charts 1002, 1006, 1008, 1010, and 1012). A threshold value can then be estimated for a particular number of local peak appearances (e.g., appearances greater than 3, in this example) The appearance threshold is a predefined value that may be selected by a user or designer of the radar system. In some embodiments, however, the threshold may be set equal to about 50% of the number of transmit channels in the radar system. In that case, if local peaks occur in a particular frequency bin in fewer than 50% of the spectra for the available transmit channels, those local peaks can be attributes to Doppler overlap and discarded or ignored as described herein. However, if a local peak appears in a particular frequency bin in more than 50% of the spectra for the available transmit channel, that local peak is likely associated with an object signal and is not attributable to Doppler overlap. In that case, those local peaks are retained and used for MIMO array processing. Accordingly, with that threshold selected, a true object peak can be defined as a local peak that appears in the same frequency bin over the threshold number of times in different spectra. If a frequency bin satisfies those requirements, then spectra that contain a local peak in that bin location can be determined to be associated with non-Doppler overlapped signals. The other spectra (e.g., that contain multiple local peaks found in frequency bins that are not associated with local peaks in the other spectra) can be designated as outliers.

At block 718, the RDM is again updated based on the identified outliers. Specifically, the values in the RDM associated with object $O_N$ (in this example, the second object) and the transmit channel TX associated with the outlier spectra may be zeroed-out to generate the corrected RDM, or otherwise modified to reduce the effect of the Doppler-overlapped signal associated with that transmit channel TX. In other embodiments, instead of zeroing-out those values, when the RDM is processed to generate the corrected RDM (e.g., at block 412) to generate the MIMO array data utilized for DOA estimation, particular weighting values may be associated with the values in the RBBM associated with that transmit channel TX to reduce the effect of those values on the ultimate MIMO array determination, thereby reducing the effect of the data values associated with Doppler overlapped signals.

If, at block 720 it is determined that there are no additional objects, the method proceeds to block 716 and finishes.

At the conclusion of method 700, therefore, for each identified objects, the signals associated with transmit channels that include Doppler overlap have been identified (by identifying the outlier spectra for those transmit channels TX) and the deleterious effects of that overlap can be corrected (e.g., by modification of the RDM to zero-out or otherwise modify the values associated with those Doppler overlap signals). As such, when the RDM is processed to perform DOA estimation and to determine other attributes of the identified objects (e.g., speed), the determined values will be more accurate than the same estimations performed on data encoding signals includes Doppler overlap.

In some aspects, the techniques described herein relate to a radar system including: a plurality of transmitter modules configured to transmit a plurality of transmitted radar signals in accordance with a Doppler Domain Multiplexing (DDM) scheme, wherein each transmitted radar signal is associated with a transmit channel of a plurality of transmit channels; a plurality of receiver modules configured to receive reflections of the plurality of transmitted radar signals reflected by at least one object and to generate signals based on the received reflections; and a signal processor configured to: generate a range-Doppler map using the signals received by the plurality of receiver modules, the range-Doppler map including values associated with a plurality of range bins and a plurality of Doppler bins, determine a first subarray including values associated with a first range bin of the range-Doppler map, wherein the first range bin is associated with a first object; calculate a plurality of spectra using the first subarray, wherein each spectra in the plurality of spectra is associated with a transmit channel of the plurality of transmit channels; calculate attributes of each spectrum in the plurality of spectra; determine, using the attributes of each spectra, a first spectrum in the plurality of spectra that includes local peaks that are not in the other spectra in the plurality of spectra; and modify values in the range-Doppler map associated with the transmit channel associated with the first spectrum to generate a corrected range-Doppler map, and determine an estimated direction of arrival of the first object using the corrected range-Doppler map.

In some aspects, the techniques described herein relate to a radar system, wherein, to calculate the attributes of each spectrum in the plurality of spectra, the signal processor is configured to determine a number of local peaks in each spectrum that is within a threshold value of a maximum value of the spectrum.

In some aspects, the techniques described herein relate to a radar system, wherein to determine, using the attributes of each spectrum, a first spectrum in the plurality of spectra that includes local peaks that are not in the other spectra in the plurality of spectra, the signal processor is configured to determine that a number of peaks in the first spectrum is different from numbers of peaks in each of the other spectrum in the plurality of spectra.

In some aspects, the techniques described herein relate to a radar system, wherein the plurality of receiver modules are arranged in a linear receive subarray and the first subarray is a uniform receive subarray.

In some aspects, the techniques described herein relate to a radar system, wherein, to modify values in the range-Doppler map associated with the transmit channel associated with the first spectrum to generate a corrected range-Doppler map, the signal processor is configured to set values in the range-Doppler map associated with the transmit channel associated with the first spectrum to zero values.

In some aspects, the techniques described herein relate to a radar system, wherein, to calculate the plurality of spectra, the signal processor is configured to calculate a fast Fourier transform of values in the first subarray.

In some aspects, the techniques described herein relate to a radar system, wherein, to calculate attributes of each spectrum in the plurality of spectra, the signal processor is configured to calculate cross-correlation values for pairs of the spectra in the plurality of spectra.

Although the examples have been described with reference to automotive radar systems, the systems and methods described herein may be implemented in conjunction with other types of radar systems.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first," "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

**Claims**

1. A radar system comprising:

   a plurality of transmitter modules configured to transmit a plurality of transmitted radar signals in accordance with a Doppler Domain Multiplexing (DDM) scheme, wherein each transmitted radar signal is associated with a transmit channel of a plurality of transmit channels;
   a plurality of receiver modules configured to receive reflections of the plurality of transmitted radar signals reflected by at least one object and to generate signals based on the received reflections; and
a signal processor configured to:

determine a range-Doppler map using the signals received by the plurality of receiver modules, the range-Doppler map including values associated with a plurality of range bins and a plurality of Doppler bins,
determine a first subarray including values associated with a first range bin of the range-Doppler map, wherein the first range bin is associated with a first obj ect;
calculate a plurality of spectra using the first subarray, wherein each spectra in the plurality of spectra is associated with a transmit channel of the plurality of transmit channels;
calculate attributes of each spectrum in the plurality of spectra;
determine, using the attributes of each spectra, a first spectrum in the plurality of spectra that includes local peaks that are not in the other spectra in the plurality of spectra;
modify values in the range-Doppler map associated with the transmit channel associated with the first spectrum to determine a corrected range-Doppler map; and
determine an estimated direction of arrival of the first object using the corrected range-Doppler map.

2. The radar system of claim 1, wherein, to calculate the attributes of each spectrum in the plurality of spectra, the signal processor is configured to determine a number of local peaks in each spectrum that is within a threshold value of a maximum value of the spectrum.

3. The radar system of claim 2, wherein to determine, using the attributes of each spectrum, a first spectrum in the plurality of spectra that includes local peaks that are not in the other spectra in the plurality of spectra, the signal processor is configured to determine that a number of peaks in the first spectrum is different from numbers of peaks in each of the other spectrum in the plurality of spectra.

4. The radar system of any preceding claim, wherein the plurality of receiver modules are arranged in a linear receive subarray and the first subarray is a uniform receive subarray.

5. The radar system of any preceding claim, wherein, to modify values in the range-Doppler map associated with the transmit channel associated with the first spectrum to determine a corrected range-Doppler map, the signal processor is configured to set values in the range-Doppler map associated with the transmit channel associated with the first spectrum to zero values.

6. The radar system of any preceding claim, wherein, to calculate the plurality of spectra, the signal processor is configured to calculate a fast Fourier transform of values in the first subarray.

7. The radar system of any preceding claim, wherein, to calculate attributes of each spectrum in the plurality of spectra, the signal processor is configured to calculate cross-correlation values for pairs of the spectra in the plurality of spectra.

8. A method, comprising:

determining a range-Doppler map using signals received by a plurality of receiver modules, the range-Doppler map including values associated with a plurality of range bins and a plurality of Doppler bins;
determining a first subarray including values associated with a first range bin of the range-Doppler map, wherein the first range bin is associated with a first object;
calculating a plurality of spectra using the first subarray, wherein each spectra in the plurality of spectra is associated with a transmit channel of the plurality of transmit channels;
calculating attributes of each spectrum in the plurality of spectra;
determining, using the attributes of each spectra, a first spectrum in the plurality of spectra that includes local peaks that are not in the other spectra in the plurality of spectra;
modifying values in the range-Doppler map associated with the transmit channel associated with the first spectrum to determine a corrected range-Doppler map; and
determining an estimated direction of arrival of the first object using the corrected range-Doppler map.

9. The method of claim 8, further comprising, to calculate the attributes of each spectrum in the plurality of spectra, determining a number of local peaks in each spectrum that is within a threshold value of a maximum value of the spectrum.

10. The method of claim 9, further comprising, to determine, using the attributes of each spectrum, a first spectrum in the plurality of spectra that includes local peaks that are not in the other spectra in the plurality of spectra, determining that a number of peaks in the first spectrum is different from numbers of peaks in each of the other spectrum in the plurality of spectra.

11. The method of any of claims 8 to 10, wherein the plurality of receiver modules are arranged in a linear receive subarray and the first subarray is a uniform receive subarray.

12. The method of any of claims 8 to 11, further comprising, to modify values in the range-Doppler map associated with the transmit channel associated with the first spectrum to determine a corrected range-Doppler map, setting values in the range-Doppler map associated with the transmit channel associated with the first spectrum to zero values.

13. The method of any of claims 8 to 12, further comprising, to calculate the plurality of spectra, calculating a fast Fourier transform of values in the first subarray.

14. The method of any of claims 8 to 13, further comprising, to calculate attributes of each spectrum in the plurality of spectra, calculating cross-correlation values for pairs of the spectra in the plurality of spectra.

15. The method of any of claims 8 to 14, further comprising transmitting an output based on the estimated direction of arrival to an automated driving assistance system of a vehicle.

FIG. 1

FIG. 2

FIG. 3

EP 4 579 270 A1

400

| RECEIVE RAW DATA | 402 |

↓

| PERFORM RANGE COMPRESSION (FAST-TIME FFT) | 404 |

↓

| PERFORM DOPPLER COMPRESSION (SLOW-TIME FFT) | 406 |

↓

| PERFORM PER-CHANNEL AOA ESTIMATION | 408 |

↓

| PERFORM DDM DECODING | 410 |

↓

| DDM OVERLAP DETECTION | 411 |

↓

| CONSTRUCT MIMO ARRAY | 412 |

↓

| GENERATE TARGET OBJECT POSITION DATA BASED ON DOA ESTIMATION | 414 |

↓

| GENERATE TARGET OBJECT TRACKING DATA | 416 |

FIG. 4

FIG. 5

FIG. 6

FIG. 7

806          808

4λ

TX ARRAY ▽ (M = 6)

RX ARRAY ▽ (N = 8)

2λ                    2λ

804          810

2λ                    2λ

802          812

820

0.5λ

3.5λ

FIG. 8

FIG. 9

FIG. 10

Europäisches
Patentamt

European
Patent Office

Office européen
des brevets

# EUROPEAN SEARCH REPORT

**Application Number**

EP 24 22 1589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 009 074 A1 (NXP USA INC [US]) 8 June 2022 (2022-06-08) * paragraph [0022] - paragraph [0044] * * figures 1-11 * | 1-15 | INV. G01S7/35 G01S13/32 G01S13/34 G01S13/44 G01S13/58 |
| A | GONZALEZ HECTOR A ET AL: "Doppler Ambiguity Resolution for Binary-Phase-Modulated MIMO FMCW Radars", 2019 INTERNATIONAL RADAR CONFERENCE (RADAR), IEEE, 23 September 2019 (2019-09-23), pages 1-6, XP033764210, DOI: 10.1109/RADAR41533.2019.171412 [retrieved on 2020-04-24] * Chapter III.C. Hypothetical Phase Compensation * * figures 1-11 * | 1-15 | ADD. G01S13/931 |
| A | US 2020/049812 A1 (JANSEN FEIKE GUSS [NL]) 13 February 2020 (2020-02-13) * abstract * * paragraph [0036] - paragraph [0037] * * figures 1-9 * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 24 April 2025 | Köppe, Maro |

EPO FORM 1503 03.82 (P04C01)

**ANNEX TO THE EUROPEAN SEARCH REPORT**
**ON EUROPEAN PATENT APPLICATION NO.**

EP 24 22 1589

This annex lists the patent family members relating to the patent documents cited in  the above-mentioned European search report.
The members are as contained in the European Patent Office EDP file on
The European Patent Office is in no way liable for these particulars which are merely given for the purpose of information.

24-04-2025

| Patent document cited in search report | | Publication date | Patent family member(s) | | Publication date |
|---|---|---|---|---|---|
| EP 4009074 | A1 | 08-06-2022 | CN | 114578358 A | 03-06-2022 |
| | | | EP | 4009074 A1 | 08-06-2022 |
| | | | US | 2022171049 A1 | 02-06-2022 |
| US 2020049812 | A1 | 13-02-2020 | CN | 110824444 A | 21-02-2020 |
| | | | EP | 3611538 A1 | 19-02-2020 |
| | | | US | 2020049812 A1 | 13-02-2020 |

EPO FORM P0459

For more details about this annex : see Official Journal of the European Patent Office, No. 12/82